# EUROPÄISCHE PATENTSCHRIFT

(11) **EP 2 072 844 B1**
(45) Veröffentlichungstag und Bekanntmachung des Hinweises auf die Patenterteilung: **10.07.2013**
(21) Anmeldenummer: 08020362.3
(22) Anmeldetag: 22.11.2008
(51) Int. Cl.: F16C 11/06

(54) **Kugelgelenkverbinder**
Ball joint connector
Articulation à rotule

(30) Priorität: 20.12.2007 DE 102007061640
(43) Veröffentlichungstag der Anmeldung: 24.06.2009
(73) Patentinhaber: FTE automotive GmbH, 96106 Ebern (DE)
(72) Erfinder: Klehr, Rainer, 96149 Breitengüssbach (DE); Steinmetz, Harry, 96106 Ebern (DE)
(74) Vertreter: Oppermann, Mark

(56) Entgegenhaltungen:
- EP-A1- 0 379 392
- DE-A1- 10 028 361
- JP-U- 63 147 922

## Beschreibung

### TECHNISCHES GEBIET

Die Erfindung betrifft einen Kugelgelenkverbinder für zwei Betätigungselemente, insbesondere für die Verbindung einer Kraftfahrzeug-Kupplungspedale mit der Druckstange eines hydraulischen Geberzylinders, entsprechend dem Oberbegriff des Patentanspruchs 1.

### STAND DER TECHNIK

Derartige Kugelgelenkverbinder sind in unterschiedlichen Ausführungsformen bekannt (DE 10 2005 030 168 A1, DE 198 24 530 A1, DE 44 28 496 C2). Diese bekannten Kugelgelenkverbinder weisen insoweit übereinstimmend den Nachteil auf, daß beim Fügen des Kugelkopfes in der Vormontageposition die Federarme der Kugelpfanne radial aufzufedern sind, um den Eintritt des Kugelkopfes in die Kugelpfanne zu ermöglichen. Hierzu sind erhebliche Montagekräfte erforderlich, die z.B. bei Über-Kopf-Montage oder an schwer zugänglichen Stellen nur unter Schwierigkeiten aufzubringen sind. Außerdem besteht dabei die Gefahr, daß der Kugelkopf bei dem Versuch, ihn in die Kugelpfanne einzufügen, vom Verriegelungsteil seitlich abgleitet oder das Verriegelungsteil sogar in dessen Endmontageposition in der Aufnahme drückt, ohne daß der Kugelkopf in die Kugelpfanne eingefügt ist.

Ein Kugelgelenkverbinder gemäß dem Oberbegriff des Patentanspruchs 1 ist aus der EP 0 379 392 A1 bekannt. Einen ähnlichen Kugelgelenkverbinder für die Verbindung eines Kraftfahrzeug-Kupplungspedals mit der Druckstange eines hydraulischen Geberzylinders offenbart die DE 100 28 361 A1.

### AUFGABENSTELLUNG

Der Erfindung liegt die Aufgabe zugrunde, den Kugelkopfverbinder im Hinblick auf die sogenannte Prozeßsicherheit bei der Herstellung der Verbindung der beiden Betätigungselemente zu verbessern, so daß gewünschtenfalls auch eine automatisierte Montage möglich sein soll.

### DARSTELLUNG DER ERFINDUNG

Diese Aufgabe wird durch die im Patentanspruch 1 angegebenen Merkmale gelöst. Vorteilhafte oder zweckmäßige Weiterbildungen sind in den Patentansprüchen 2 bis 13 angegeben und werden nachfolgend ebenfalls näher beschrieben.

Erfindungsgemäß umfasst ein Kugelgelenkverbinder für zwei Betätigungselemente, insbesondere für die Verbindung eines Kraftfahrzeug-Kupplungspedals mit der Druckstange eines hydraulischen Geberzylinders, zunächst einen Kugelkopf an dem einen Betätigungselement, ein eine Kugelpfanne aufweisendes Verriegelungsteil und eine Aufnahme für das Verriegelungsteil an dem anderen Betätigungselement, wobei das Verriegelungsteil in die Aufnahme zunächst bis zu einer Vormontageposition, in welcher der Kugelkopf in die Kugelpfanne einfügbar ist, und danach zusammen mit dem Kugelkopf bis zu einer Endmontageposition einschiebbar ist, in welcher der Kugelkopf in der Kugelpfanne durch das Verriegelungsteil mit Hinterschnitt festgehalten ist und das Verriegelungsteil in der Aufnahme verriegelt ist, wobei das Verriegelungsteil sowohl in der Vormontageposition als auch in der Endmontageposition durch radial federnde Vorsprünge des Verriegelungsteils an festen Anlageflächen der Aufnahme gehalten ist, und der Kugelkopf in der Endmontageposition durch Federarme, die durch axiale Schlitze in der Wandung der Kugelpfanne gebildet sind, sich in der Endmontageposition an der Innenwandfläche der Aufnahme abstützen und dem Kugelkopf mit Hinterschnitt anliegen, in der Kugelpfanne gehalten ist wobei das Verriegelungsteil an den Federarmen seiner Kugelpfanne eine Öffnung für den Kugelkopf bildet, die in der Vormontageposition dem Durchmesser des Kugelkopfes gleich oder größer als dieser ist.

Die Erfindung ermöglicht insoweit in der Vormontageposition des Verriegelungsteils in der Aufnahme ein Fügen des Kugelkopfes in die Kugelpfanne des Verriegelungsteils, das praktisch frei von Montagekräften ist, denn der Kugelkopf kann in die Kugelpfanne ohne radiales Auffedern der Federarme einfach eingelegt werden, ohne daß die Gefahr eines Abgleitens des Kugelkopfes von dem Verriegelungsteil oder des vorzeitigen Eindrückens des Verriegelungsteils in die Endmontageposition in der Aufnahme besteht. Die Anordnung und Ausbildung der Federarme ist dabei derart, daß ein Hinterschnitt der Federarme bezüglich des Kugelkopfes erst eintritt, wenn das Verriegelungsteil zusammen mit dem Kugelkopf in die Endmontageposition in der Aufnahme eingeschoben wird, wobei sich die Federarme mit ihren Außenumfangsflächen an der Innenwandfläche der Aufnahme abstützen.

Ferner nehmen erfindungsgemäß die Federarme mindestens die Hälfte des Umfangs der Kugelpfanne ein, während der verbleibende Umfangsteil als nichtfedernder fester Wandabschnitt zur Aufnahme des Hauptanteils der im Betrieb auftretenden Kräfte ausgebildet ist und sich dabei flächig an der Innenwandfläche der Aufnahme abstützt. Demgemäß kann der feste Wandabschnitt bis zur Hälfte des Umfangs der Kugelpfanne einnehmen. Der nichtfedernde feste Wandabschnitt besitzt hierbei erfindungsgemäß eine etwas größere axiale Länge als die Federarme, welche eine übereinstimmende axiale Länge aufweisen, und ist an seiner Innenfläche bezüglich des Kugelkopfes in Axialrichtung gesehen permanent hinterschnitten, wodurch sowohl die den Hauptanteil der im Betrieb auftretenden Kräfte übertragende Fläche als auch die zum gewaltsamen Ausziehen des Kugelkopfes aus der Endmontageposition erforderliche Kraft vergrößert wird.
Vorzugsweise nehmen die Federarme etwa drei Viertel des Umfangs der Kugelpfanne ein.

Die Federarme des Verriegelungsteils können an einer äußeren Umfangsnut der Wandung der Kugelpfanne beginnen und an dieser Umfangsnut, die nicht über den festen Wandabschnitt durchgeht, im nicht-endmontierten Zustand zur Bildung der Öffnung für den Kugelkopf radial nach außen ausgestellt sein. Beim Einschieben des Verriegelungsteils mit in die Kugelpfanne eingefügtem Kugelkopf werden die Federarme durch die Innenwand der Aufnahme radial nach innen gebogen, bis sie dem Kugelkopf in der Endmontageposition unter Hinterschnittbildung an allen Federarmen anliegen und so den Kugelkopf gemeinsam mit dem festen Wandabschnitt gegen axiales Herausziehen aus der Aufnahme beziehungsweise dem darin verriegelten Verriegelungsteil sichern.

Zweckmäßig ist am Außenumfang des Verriegelungsteils eine axial angeordnete Rippe vorgesehen, welcher eine Axialnut in der Innenwandfläche der Aufnahme komplementär zugeordnet ist. Rippe und Axialnut bilden eine Verdrehsicherung zwischen dem Verriegelungsteil und der Aufnahme und sorgen dafür, daß das Verriegelungsteil bezüglich seines festen Wandabschnitts nur in der dafür vorgesehenen Lage in die Aufnahme eingeführt werden kann.

In weiterer Ausbildung der Erfindung kann vorgesehen sein, daß an der den Federarmen abgelegenen Seite des Verriegelungsteils zwei etwa diametral gegenüberliegende radial federnde erste Vorsprünge vorgesehen sind, welche in der Vormontageposition des Verriegelungsteils einer festen Anlagefläche in der Aufnahme anliegen, wodurch das Verriegelungsteil gegen Herausziehen aus der Aufnahme gesichert ist.

Dabei sind weiterhin vorzugsweise an der den Federarmen abgelegenen Seite des Verriegelungsteils paarweise etwa diametral gegenüberliegend mehrere radial federnde zweite Vorsprünge vorgesehen, die den Federarmen in axialer Richtung näher liegen als die der festen Anlagefläche in der Vormontageposition anliegenden ersten Vorsprünge und die der festen Anlagefläche in der Endmontageposition anliegen, wodurch das Verriegelungsteil und der Kugelkopf gegen Herausziehen aus der Aufnahme gesichert sind.

Um beim Einschieben des Verriegelungsteils in die Aufnahme zunächst die ersten Vorsprünge und danach die zweiten Vorsprünge gegen ihre jeweilige Federkraft radial verlagern zu können, bis sie in der Vormonateposition bzw. in der Endmontageposition hinter der festen Anlagefläche einrasten und so mit der Anlagefläche in der Aufnahme zur Anlage gelangen, kann die Anordnung vorteilhaft so getroffen sein, daß an den ersten Vorsprüngen und den zweiten Vorsprüngen jeweils Auflaufschrägflächen vorgesehen sind, denen in der Aufnahme eine komplementäre ringförmige Konusfläche zugeordnet ist, die aus der Innenwandfläche der Aufnahme radial vorspringend und der festen Anlagefläche benachbart gebildet ist. Dabei treffen beim Einschieben des Verriegelungsteils in die Aufnahme zunächst die Auflaufschrägflächen der ersten Vorsprünge auf die ringförmige Konusfläche auf und werden federnd einwärts verlagert, bis sie bei Erreichen der Vormontageposition radial auswärts zurückfedernd zur Anlage an die Anlagefläche gelangt sind. Bei weiterem Einschieben des Verriegelungsteils in die Aufnahme gleiten dann die Auflaufschrägflächen der zweiten Vorsprünge auf der ringförmigen Konusfläche und die zweiten Vorsprünge werden federnd radial einwärts verlagert, bis sie bei Erreichen der Endmontageposition radial auswärts zurückfedernd zur Anlage an die feste Anlagefläche gelangt sind.

In einer anderen Ausführungsform können die Auflaufschrägflächen an den radial federnden zweiten Vorsprüngen in axialer Richtung in mehreren Stufen unterschiedlich weit von den Federarmen beabstandet sein und beim Einschieben des Verriegelungsteils in die Endmontageposition nacheinander auf die ringförmige Konusfläche auftreffen, bis sie schließlich gleichzeitig mit der festen Anlagefläche zur Anlage kommen. Auf diese Weise ergibt sich ein abgestufter Fügekraftverlauf, weil beim Einschieben des Betätigungselements aus der Vormontageposition in die Endmontageposition stufenweise jeweils zwei gegenüberliegende zweite Vorsprünge gegen ihre Federkraft radial einwärts zu verlagern sind.

Das Verriegelungsteil kann weiterhin so ausgebildet sein, daß konzentrisch mit der Kugelpfanne und dieser entgegengesetzt am Verriegelungsteil ein Zapfen vorgesehen ist, der in der Vormontageposition und in der Endmontageposition in eine zentrale Ausnehmung in der Aufnahme das Verriegelungsteil bezüglich der Aufnahme zentrierend eingreift, wobei an dem Zapfen mindestens eine Anschlagfläche vorgesehen ist, welche auf eine Gegenfläche in der Aufnahme trifft, wenn beim Einschieben des Verriegelungsteils das Verriegelungsteil die Endmontageposition erreicht hat. Da hierbei der Zapfen aus der Aufnahme nach außen hervorsteht, läßt sich leicht per Hand kontrollieren, ob die Endmontage ordnungsgemäß vorgenommen wurde. Außerdem dient der Zapfen zum Herausdrücken des Verriegelungsteils aus der Aufnahme bei der Demontage des Kugelgelenkverbinders.

Bei Einsatz des erfindungsgemäßen Kugelgelenkverbinders für die Verbindung eines Kraftfahrzeug-Kupplungspedals mit der Druckstange eines hydraulischen Geberzylinders erfolgt die Druckbeanspruchung des Kugelverbinders ausgehend vom Kugelkopf über den festen Wandabschnitt der Kugelpfanne und die Wandung der Aufnahme in Längsrichtung der Druckstange. Um auch sehr große Druckbeanspruchungen in dieser Richtung ohne Gefahr des Herauspressens des Kugelkopfes aus der Kugelpfanne aufnehmen zu können ist es von Vorteil, wenn in der Innenwandfläche der Aufnahme innerhalb des Anlagebereichs des nichtfedernden festen Wandabschnitts der Kugelpfanne eine flache Hinterschnittfläche vorgesehen ist. Unter einer "flachen Hinterschnittfläche" wird hier eine Fläche verstanden, die durch eine flache hinterschnittene Vertiefung in der Innenwandfläche der Aufnahme gebildet ist, wobei diese Fläche eben oder gekrümmt ausgebildet sein kann.

Zweckmäßig ist diese Hinterschnittfläche um maximal 2° zur Mittelachse der Aufnahme geneigt angeordnet und erstreckt sich bezogen auf die Endmontageposition etwa in einer Höhe oberhalb der Kugelkopfmitte beginnend in Fügerichtung des Verriegelungsteils. Bei Aufbringung einer großen Kraft in Richtung der Druckstange verdrängt der Kugelkopf Werkstoff aus dem festen Wandabschnitt in die vertiefte Hinterschnittfläche, wodurch auch bei Auftreten sehr großer Kräfte der Kugelkopf sicher in der Kugelpfanne verbleibt, wobei der feste Wandabschnitt durch die Materialverdrängung dem Kugelkopf zusätzlich oberhalb der Kugelkopfmitte mit seinem hinterschnittenen Bereich angepreßt wird. Da die Hinterschnittfläche zu diesem Zweck nur sehr flach und von geringer Neigung ist, läßt sich die spritzgeformte Druckstange mit ihrer Aufnahme ohne Schwierigkeiten aus dem Formwerkzeug entformen.

Bei einer alternativen Ausführungsform kann die Anordnung so getroffen sein, daß am Außenumfang des nichtfedernden festen Wandabschnitts mehrere Längsnuten vorgesehen sind, in welche jeweils ein aus der Innenwandfläche der Aufnahme vorstehender Vorsprung eingreift, der sich bezogen auf die Endmontageposition oberhalb des Kugelmittelpunkts befindet.

Hierbei ist in der zylindrischen Innenwandfläche der Aufnahme keine hinterschnittene Vertiefung vorgesehen. Vertiefungen in Form von Längsnuten befinden sich dagegen am Außenumfang des nichtfedernden festen Wandabschnitts. Diese Längsnuten werden durch darin eingreifende, an die Innenwandfläche der Aufnahme angeformte Vorsprünge oberhalb des Kugelmittelpunkts in ihrer Länge begrenzt. Bei Aufbringung einer sehr großen Kraft in Richtung der Druckstange verdrängt der Kugelkopf aus dem festen Wandabschnitt Material, das in die Längsnuten fließt, wobei an den Vorsprüngen Reaktionskräfte entstehen, welche auf den Kugelkopf im Sinne einer zusätzlichen Anpressung des hinterschnittenen Bereichs des nichtfedernden festen Wandabschnitts einwirken.

Zweckmäßig können schließlich die Vorsprünge kugelabschnittsförmig ausgebildet sein und in im Querschnitt komplementär angepaßte Längsnuten eingreifen.

### KURZE BESCHREIBUNG DER ZEICHNUNGEN

Weitere Einzelheiten der Erfindung werden nachfolgend anhand der ein bevorzugtes Ausführungsbeispiel darstellenden Zeichnungen näher erläutert. Darin zeigen:
- Fig. 1: die Draufsicht auf einen hydraulischen Geberzylinder mit Druckstange, die im Bereich der Aufnahme zur Verdeutlichung des Kugelgelenkverbinders im Schnitt dargestellt ist und mit in Strich-Punkt-Linien eingezeichnetem Kugelkopf am Kupplungspedal eines Kraftfahrzeugs,
- Fig. 2: eine Seitenansicht der Anordnung gemäß Fig. 1, mit abgebrochen dargestelltem Kupplungspedal,
- Fig. 3: eine Seitenansicht auf die Aufnahme, die sich an einer abgebrochen dargestellten Druckstange befindet,
- Fig. 4: den Schnitt durch die Aufnahme entsprechend der Schnittverlaufslinie IV-IV in Fig. 3,
- Fig. 5: den Schnitt durch die Aufnahme entsprechend der Schnittverlaufslinie V-V in Fig. 3,
- Fig. 6: die in den Fig. 3 bis 5 dargestellte Aufnahme in perspektivischer abgebrochener Darstellung, jedoch mit in der Innenwandfläche der Aufnahme angebrachter Hinterschnittfläche,
- Fig. 7: eine Seitenansicht des Verriegelungsteils mit Blickrichtung auf den festen Wandabschnitt der Kugelpfanne,
- Fig. 8: den Schnitt durch das Verriegelungsteil entsprechend der Schnittverlaufslinie VIII-VIII in Fig. 7,
- Fig. 9: eine perspektivische Darstellung des Verriegelungsteils mit Blickrichtung auf die Kugelpfanne,
- Fig. 10: eine andere perspektivische Darstellung des Verriegelungsteils mit Blickrichtung auf die radial federnden ersten und zweiten Vorsprünge,
- Fig. 11: einen Schnitt durch die Aufnahme und das in die Vormontageposition eingeschobene Verriegelungsteil, bei noch nicht in die Kugelpfanne eingefügtem Kugelkopf,
- Fig. 12: den der Fig. 11 entsprechenden Schnitt durch die Aufnahme und das Verriegelungsteil in der Vormontageposition, jedoch mit in die Kugelpfanne eingefügtem Kugelkopf,
- Fig. 13: die in den Fig. 11 und 12 gezeigten Teile des Kugelgelenkverbinders in der Endmontageposition,
- Fig. 14: eine der Fig. 7 ähnliche Seitenansicht des Verriegelungsteils, jedoch in der Ausführungsform mit stufenweiser Anordnung der Auflaufschrägflächen an den zweiten Vorsprüngen,
- Fig. 15: einen Schnitt durch die Aufnahme und das in die Endmontageposition eingeschobene Verriegelungsteil mit eingefügtem Kugelkopf, jedoch in einer bezüglich der Fig. 11 bis 13 anderen Ausführungsvariante und
- Fig. 16: den Schnitt entlang der Schnittverlaufslinie XVI-XVI in Fig. 15.

### DETAILLIERTE BESCHREIBUNG DER BEVORZUGTEN AUSFÜHRUNGSBEISPIELE

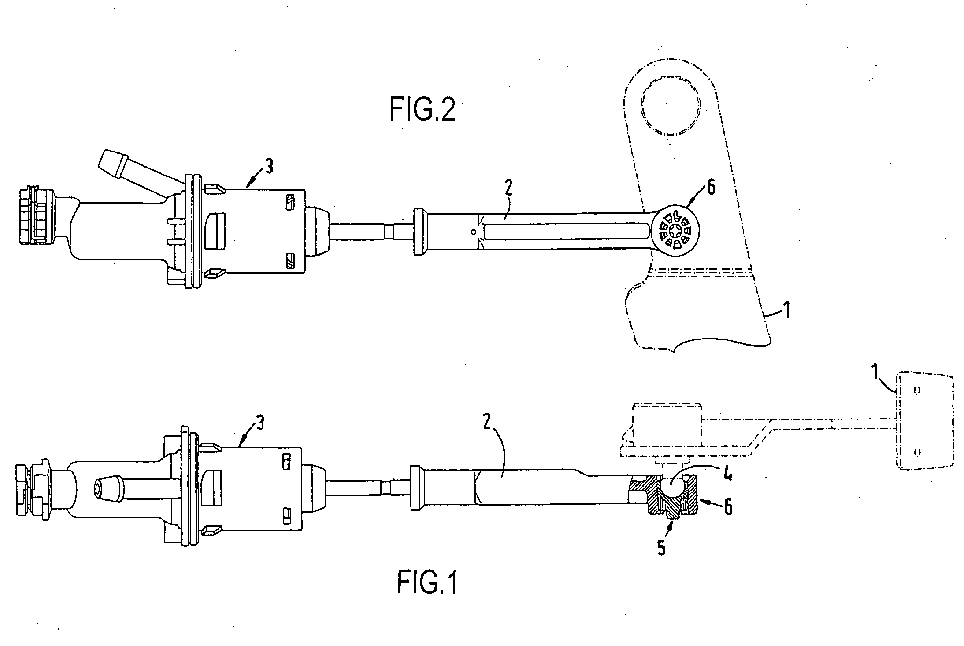

Wie aus den Fig. 1 und 2 hervorgeht, ist ein schwenkbar gelagertes Kraftfahrzeug-Kupplungspedal 1 mit der Druckstange 2 eines hydraulischen Geberzylinders 3 über den erfindungsgemäß ausgebildeten Kugelgelenkverbinder verbunden. Der Kugelgelenkverbinder besteht aus drei Elementen, nämlich einem am Kupplungspedal 1 befestigten Kugelkopf 4, ein den Kugelkopf 4 aufnehmendes Verriegelungsteil 5 und eine an der Druckstange 2 angebrachte Aufnahme 6 für das Verriegelungsteil 5.

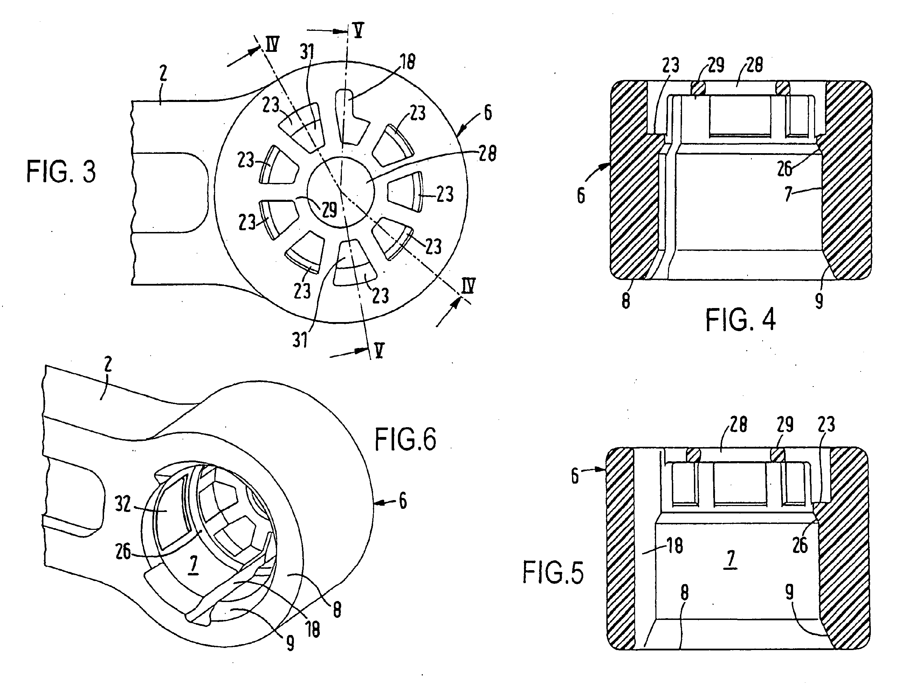

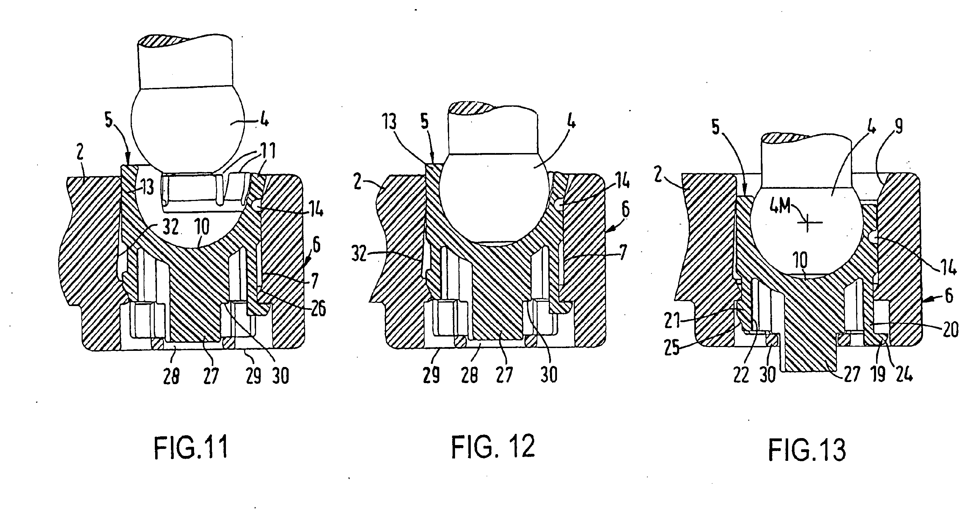

Die insbesondere in den Fig. 3 bis 5 dargestellte Aufnahme 6 ist an das dem Geberzylinder 3 abgelegene Ende der Druckstange 2 angeformt und besitzt die äußere Gestalt eines Zylinderkörpers und einen zentralen Hohlraum, der in seinem mittleren Bereich von einer im wesentlichen zylindrischen Innenwandfläche 7 begrenzt ist. Um die Einführung des Verriegelungsteils 5 in die Aufnahme 6 zu erleichtern, befindet sich zwischen der Außenfläche 8 der Aufnahme 6 und der Innenwandfläche 7 eine sich nach außen zu konisch erweiternde Fase 9, die aber nicht über den vollen Umfang der Innenwandfläche 7 durchgehend ist, wie die Fig. 6 in Verbindung mit den Fig. 11 bis 13 verdeutlicht. Die Fase 9 ist über etwa Dreiviertel des Umfangs durchgehend. Im Übertragungsbereich für die von dem Kugelkopf 4 über das Verriegelungsteil 5 auf die Innenwandfläche 7 bei Kupplungsbetätigung ausgeübte größte Druckkraft geht die Innenwandfläche 7 axial bis zur Außenfläche 8 durch, wie am besten in Fig. 6 zu erkennen ist. Weitere Ausbildungseinzelheiten der Aufnahme 6 werden weiter unten in Verbindung mit der Beschreibung des Verriegelungsteils 5 noch näher erläutert.

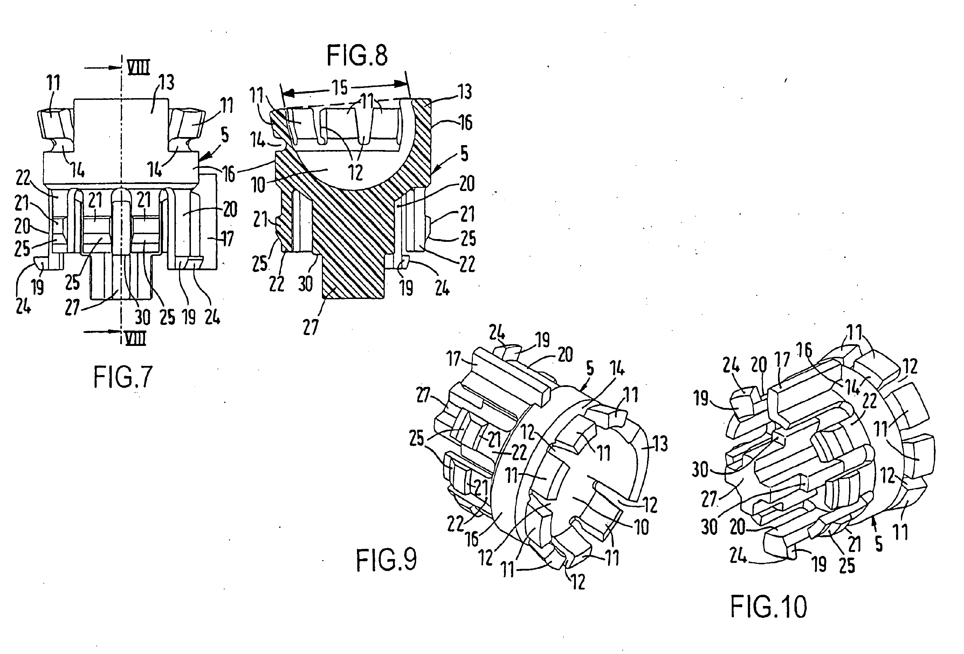

Zur Beschreibung des Verriegelungsteils 5 wird zunächst auf die Fig. 7 bis 10 Bezug genommen. Im Verriegelungsteil 5 ist eine Kugelpfanne 10 vorgesehen, die komplementär zum Kugelkopf 4 ausgebildet ist. Der Kugelkopf 4 ist in der Endmontageposition (Fig. 13) durch eine Mehrzahl von Federarmen 11 in der Kugelpfanne 10 gehalten. Die Federarme 11 sind durch axiale Schlitze 12 in der Wandung der Kugelpfanne 10 gebildet. In der Endmontageposition stützen sich die Federarme 11 an der Innenwandfläche 7 der Aufnahme 6 ab und liegen dem Kugelkopf 4 mit Hinterschnitt an, so daß der Kugelkopf 4 in der Endmontageposition nicht aus der Kugelpfanne 10 herausgezogen werden kann.

Im gezeichneten Beispiel sind sieben Federarme 11 vorgesehen und diese nehmen den größten Teil des Umfangs der Kugelpfanne 10 ein, nämlich etwa Dreiviertel des Umfangs der Kugelpfanne. Der verbleibende Umfangsteil ist als nichtfedernder fester Wandabschnitt 13 zur Aufnahme des Hauptanteils der im Betrieb auftretenden Kräfte ausgebildet. Der Wandabschnitt 13 stützt sich flächig an der Innenwandfläche 7 der Aufnahme 6 ab. Während die Federarme 11 dieselbe axiale Länge aufweisen, besitzt der Wandabschnitt 13 eine etwas größere axiale Länge und ist an seiner Innenfläche in Fortsetzung der Kugelpfanne 10 kugelkalottenförmig und bezüglich des Kugelkopfes 4 permanent hinterschnitten ausgebildet.

Die Federarme 11 bzw. die axialen Schlitze 12 beginnen an einer äußeren Umfangsnut 14 in der Wandung der Kugelpfanne 10 und sind an dieser Umfangsnut 14 im nicht-endmontierten Zustand zur Bildung der Öffnung für den Eintritt des Kugelkopfes 4 nach außen ausgestellt. Die Umfangsnut 14 ist im Wandabschnitt 13 nicht vorhanden. Die Federarme 11 und der Wandabschnitt 13 begrenzen diese Öffnung, deren Größe in Fig. 8 als Maßlinie (15) angegeben ist. In der Vormontageposition (Fig. 11 und 12) entspricht dieses Maß der Öffnung 15 dem Durchmesser des Kugelkopfes 4 oder ist größer als dieser. Der Kugelkopf 4 läßt sich daher ohne elastische Verformung der Federarme 11, d.h. ohne Kraftaufwand in die Kugelpfanne 10 einfügen.

Der Wandabschnitt 13 ist mit seiner Außenumfangsfläche Teil einer Zylinderfläche 16, die in ihrem Durchmesser der zylindrischen Innenwandfläche 7 der Aufnahme 6 angepaßt ist, so daß sich das Verriegelungsteil 5 passend in die Aufnahme 6 einschieben läßt. Am Außenumfang des Verriegelungsteils 5 ist eine axial angeordnete und radial vorspringende Rippe 17 vorgesehen, welcher eine Axialnut 18 in der Innenwandfläche 7 der Aufnahme 6 komplementär zugeordnet ist. Die Rippe 17 und die Axialnut 18 sorgen dafür, daß das Verriegelungsteil 5 nur in der dadurch vorgegebenen Relativlage in die Aufnahme 6 eingeschoben werden kann.

Für die Verriegelung des Verriegelungsteils 5 in der Aufnahme 6 in der Vormontageposition und in der Endmontageposition sind an dem Verriegelungsteil 5 radial federnde Vorsprünge und in der Aufnahme 6 eine feste Anlagefläche vorgesehen, wie nachfolgend näher beschrieben wird.

An der den Federarmen 11 abgelegenen Seite des Verriegelungsteils 5 sind, wie am besten aus den Fig. 7 und 10 hervorgeht, zwei etwa diametral gegenüberliegende radial federnde erste Vorsprünge 19 vorgesehen. Diese ersten Vorsprünge 19 befinden sich an den Enden von Federzungen 20 und sind radial nach außen gerichtet. Weiterhin sind an der den Federarmen 11 abgelegenen Seite des Verriegelungsteils 5 paarweise etwa diametral gegenüberliegende und radial federnde zweite Vorsprünge 21 vorgesehen, die sich ebenfalls an den Enden von Federzungen 22 befinden und radial nach außen gerichtet sind. Die beiden Federzungen 20 sind länger als die Federzungen 22, so daß die zweiten Vorsprünge 21 den Federarmen 11 in axialer Richtung näher liegen als die ersten Vorsprünge 19. Im gezeigten Beispiel sind sechs Federzungen 22 von gleicher axialer Länge vorhanden.

Den ersten und zweiten Vorsprüngen 19 und 21 ist in der Aufnahme 6 eine als Ringstufe ausgebildete feste Anlagefläche 23 zugeordnet, die im gezeigten Beispiel in acht Einzelflächen aufgeteilt ist, die sich aber in einer Ebene befinden und von denen jede Fläche einem ersten Vorsprung 19 oder einem zweiten Vorsprung 21 zugeordnet ist.

Die ersten Vorsprünge 19 liegen der festen Anlagefläche 23 in der Vormontageposition des Verriegelungsteils 5 an (Fig. 11 und 12). Die zweiten Vorsprünge 21 liegen der festen Anlagefläche 23 in der Endmontageposition an (Fig. 13), in welcher sich die ersten Vorsprünge 19 nicht mehr an der Anlagefläche 23 befinden (Fig. 13).

An den ersten Vorsprüngen 19 und den zweiten Vorsprüngen 21 sind jeweils rampenartige Auflaufschrägflächen 24 bzw. 25 vorgesehen. Diesen Auflaufschrägflächen 24, 25 ist in der Aufnahme 6 eine komplementäre ringförmige Konusfläche 26 zugeordnet. Diese Konusfläche 26 ist an der Innenwandfläche 7 der Aufnahme 6 radial vorspringend und der festen Anlagefläche 23 axial benachbart gebildet.

Aufgrund dieser Anordnung treffen beim Einschieben des Verriegelungsteils 5 in die Aufnahme 6 zunächst die Auflaufschrägflächen 24 der ersten Vorsprünge 19 auf die ringförmige Konusfläche 26 auf. Bei fortgesetzter Schiebebewegung gleiten die Auflaufschrägflächen 24 auf der Konusfläche 26 und die Federzungen 20 mit ihren ersten Vorsprüngen 19 werden federnd einwärts verlagert, bis sie bei Erreichen der Vormontageposition radial auswärts zurückfedern, wobei die ersten Vorsprünge 19 einschnappend hinter die feste Anlagefläche 23 treten. Hierbei sorgen die radial nach außen ausgestellten Federarme 11, die der Fase 9 aufsitzen, dafür, daß ohne Erhöhung des Kraftaufwands beim Einschieben das Verriegelungsteil 5 in der Vormontagestellung zunächst in der Aufnahme 6 fixiert bleibt. Dieser Effekt wird noch durch die Anlage der Auflaufschrägflächen 25 der zweiten Vorsprünge 21 an die Konusfläche 26 unterstützt, wie die Fig. 11 und 12 zu erkennen geben.

In der in Fig. 11 gezeigten Vormontageposition der Teile des Kugelgelenkverbinders kann der Kugelkopf 4 ohne Kraftaufwand durch die Öffnung 15 hindurch in die Kugelpfanne 10 eingefügt werden, wie Fig. 12 veranschaulicht. Wird jetzt der Kugelkopf 4 unter Mitnahme des Verriegelungsteils 5 unter erhöhtem Kraftaufwand weiter in die Aufnahme 6 eingeschoben, gleiten die Auflaufschrägflächen 25 der zweiten Vorsprünge 21 auf der Konusfläche 26 und die Federzungen 22 mit ihren zweiten Vorsprüngen 21 werden federnd einwärts verlagert, bis sie bei Erreichen der Endmontageposition radial auswärts zurückfedern, wobei die zweiten Vorsprünge 21 einschnappend hinter die feste Anlagefläche 23 treten, wie das in Fig. 13 dargestellt ist. Bei diesem Einschiebevorgang aus der Vormontageposition in die Endmontageposition gelangen auch die radial nach außen ausgestellten Federarme 11 in Berührung mit der zylindrischen Innenwandfläche 7 und werden an der Umfangsnut 14 federnd einwärts gebogen, bis sie die Endmontageposition gemäß Fig. 13 erreicht haben. In dieser Position liegen sie dem Kugelkopf 4 mit Hinterschnitt an, so daß der Kugelkopf auch gegen hohe Auszugskräfte in der Kugelpfanne 10 fixiert ist.

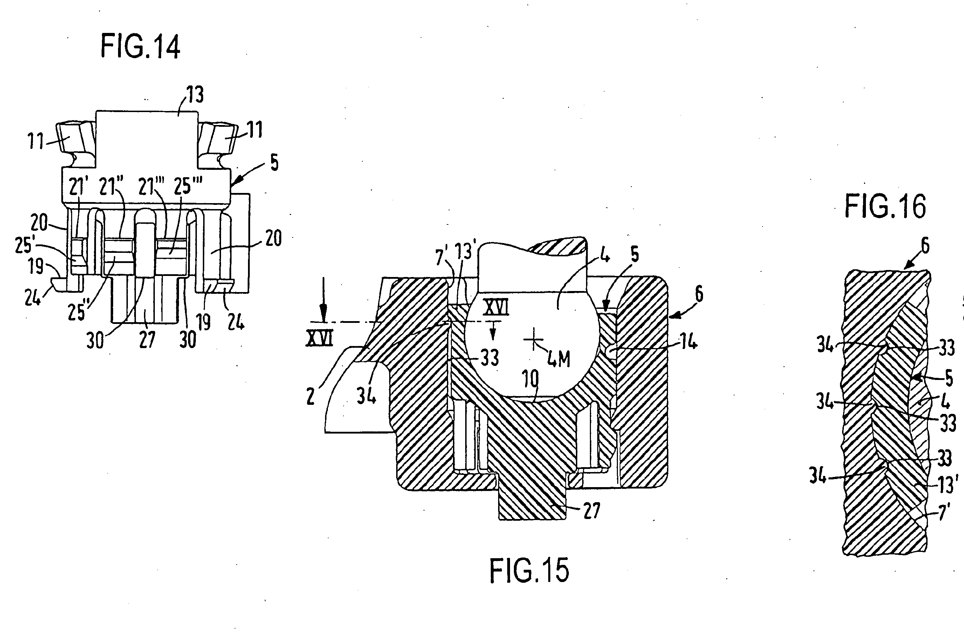

In einer in Fig. 14 dargestellten Variante kann das Verriegelungsteil 5 so ausgebildet sein, daß die Auflaufschrägflächen 25', 25'', 25''' an den radial federnden zweiten Vorsprüngen 21', 21'', 21''' in axialer Richtung in mehreren Stufen unterschiedlich weit von den Federarmen 11 beabstandet sind. Aufgrund dieser Anordnung treffen die Auflaufschrägflächen 25', 25'', 25''' beim Einschieben des Verriegelungsteils 5 aus der Vormontageposition in die Endmontageposition nacheinander auf die ringförmige Konusfläche 26 auf, woraus ein abgestufter Fügekraftverlauf resultiert.

Wie aus den Fig. 7 bis 14 hervorgeht, ist konzentrisch mit der Kugelpfanne 10 und dieser entgegengesetzt am Verriegelungsteil 5 ein Zapfen 27 vorgesehen. Dieser Zapfen 27 greift sowohl in der Vormontageposition als auch in der Endmontageposition in eine zentrale Ausnehmung 28 in der Aufnahme 6 des Verriegelungsteils 5 bezüglich der Aufnahme 6 zentrierend ein. Die zentrale Ausnehmung 28 ist in der Bodenwand 29 der Aufnahme 6 vorgesehen. An dem im Querschnitt kreuzförmig ausgebildeten Zapfen 27 sind vier Anschlagflächen 30 angeordnet, die auf die ihnen zugekehrte Gegenfläche der Bodenwand 29 auftreffen, wenn beim Einschieben des Verriegelungsteils dieses die Endmontageposition erreicht hat.

In der Bodenwand 29 sind sektorförmige Aussparungen vorgesehen, wodurch die Bodenwand 29 in ihrer Struktur an ein Speichenrad erinnert. In zwei etwa diametral gegenüberliegende Aussparungen 31 (Fig. 3) treten die ersten Vorsprünge 19 ein, wenn beim Einschiebvorgang die Endmontageposition erreicht wird. Der Zapfen 27 steht dann über die Bodenwand 29 nach außen vor und erlaubt einerseits eine von Hand durchführbare Kontrolle über den richtigen Montagezustand des Kugelgelenkverbinders und ermöglicht andererseits die Demontage des Kugelgelenkverbinders durch Ausübung einer ausreichend großen Axialkraft auf den Zapfen 27 in der der Einschieberichtung entgegengesetzten Richtung, was mittels eines einfachen Hebelwerkzeugs erfolgen kann.

Wie aus den Fig. 6 und 11 bis 13 hervorgeht, kann in der Innenwandfläche 7 der Aufnahme 6 innerhalb des Anlagebereichs für den nichtfedernden festen Wandabschnitt 13 der Kugelpfanne 10 eine flache Hinterschnittfläche 32 vorgesehen sein. Diese Hinterschnittfläche 32 bildet eine flache Vertiefung in der Innenwandfläche 7, die um maximal 2° zur Mittelachse der Aufnahme 6 geneigt angeordnet ist und bezogen auf die Endmontageposition in einer Höhe etwas oberhalb der Kugelkopfmitte 4M beginnend sich in Fügerichtung des Verriegelungsteils 5 erstreckt.

Aufgrund dieser Anordnung und Ausbildung läßt sich die Aufnahme 6 einerseits nach dem Spritzformungsprozeß der Druckstange 2 trotz der Hinterschnittfläche 32 ohne Schwierigkeiten entformen. Andererseits verhindert die Hinterschnittfläche 32 ein Herauspressen des Kugelkopfes 4 aus der Kugelpfanne 10 selbst bei Auftreten hoher von dem Kugelkopf 4 in Richtung der Druckstange 2 ausgehender Kräfte, weil dabei aus dem festen Wandabschnitt 13 der Kugelpfanne 10 Material in die Hinterschnittvertiefung verdrängt wird, wodurch der feste Wandabschnitt 13 durch die Materialverdrängung dem Kugelkopf 4 oberhalb der Kugelkopfmitte 4M mit seinem hinterschnittenen Bereich zusätzlich angepreßt wird.

Die drei Teile des Kugelgelenkverbinders können aus geeigneten thermoplastischen Kunststoffen spritzgeformt sein. Bei dem beschriebenen Einsatz des Kugelgelenkverbinders an Kraftfahrzeugkupplungs-Betätigungselementen besteht der Kugelkopf vorzugsweise aus Stahl. In den Fig. 3 bis 16 der Zeichnungen sind die Teile des Kugelgelenkverbinders zur Verdeutlichung von Einzelheiten erheblich vergrößert dargestellt. Beispielsweise kann der Kugelkopf einen Durchmesser von nur 10 mm haben.

Bei der in den Fig. 15 und 16 dargestellten Ausführungsvariante sind am Außenumfang des nichtfedernden festen Wandabschnitts 13' des Verriegelungsteils 5 drei Längsnuten 33 vorgesehen, die in Richtung zum Zapfen 27 hin offen sind, wie aus Fig. 15 hervorgeht. Den drei Längsnuten 33 sind drei aus der Innenwandfläche 7' vorstehende Vorsprünge 34 komplementär zugeordnet. Die Vorsprünge 34 treten beim Einfügen des Verriegelungsteils 5 in die Aufnahme 6 in die Längsnuten 33 ein. Da das nur in einer bestimmten Relativstellung zwischen dem Verriegelungsteil 5 und der Aufnahme 6 möglich ist, könnte bei dieser Ausführungsvariante auf die Rippe 17 und die Axialnut 18 verzichtet werden.

Im gezeigten Beispiel sind die Vorsprünge 34 kugelabschnittsförmig ausgebildet und greifen in die im Querschnitt komplementär angepaßten Längsnuten 33 ein, wie Fig. 16 verdeutlicht. Wie weiter vorn schon beschrieben wurde, fließt bei sehr hoher Druckbeanspruchung des Wandabschnitts 13' durch den Kugelkopf 4 Material des Wandabschnitts 13' in die Längsnuten 33 und stützt sich gewissermaßen an den Vorsprüngen 34 ab. Dadurch wird der Anpreßdruck des hinterschnittenen Bereichs des Wandabschnitts 13' auf den Kugelkopf 4 oberhalb der Kugelmitte 4M verstärkt und der Kugelkopf 4 sicher in der Kugelpfanne 10 gehalten.

Es wird ein Kugelgelenkverbinder, insbesondere für die Verbindung zwischen einem Kraftfahrzeug-Kupplungspedal und der Druckstange eines hydraulischen Geberzylinders vorgeschlagen, bei welchem an die Druckstange eine Aufnahme für ein Verriegelungsteil angeformt ist, welches seinerseits zur Aufnahme eines Kugelkopfes ausgebildet ist. Bei der Montage des Kugelgelenkverbinders wird das Verriegelungsteil zunächst innerhalb der Aufnahme in eine verriegelte Vormontageposition gebracht, worauf der Kugelkopf ohne Kraftaufwand in die Kugelpfanne des Verriegelungsteils einfügbar ist, wonach schließlich das Verriegelungsteil mittels des Kugelkopfes innerhalb der Aufnahme in eine verriegelte Endmontageposition gedrückt wird, in welcher der Kugelkopf durch im wesentlichen dabei entstehende Hinterschnittflächen am Verriegelungsteil in der Kugelpfanne des Verriegelungsteils ohne Beeinträchtigung der Kugelgelenkfunktion gegen Herausziehen des Kugelkopfes festgehalten wird.

### BEZUGSZEICHENLISTE

- 1: Kupplungspedal
- 2: Druckstange
- 3: Geberzylinder
- 4: Kugelkopf
- 4M: Kugelkopfmitte
- 5: Verriegelungsteil
- 6: Aufnahme
- 7, 7': Innenwandfläche
- 8: Außenfläche
- 9: Fase
- 10: Kugelpfanne
- 11, 11': Federarme
- 12: axiale Schlitze
- 13, 13': Wandabschnitt
- 14: Umfangsnut
- 15: Öffnung
- 16: Zylinderfläche
- 17: Rippe
- 18: Axialnut
- 19: erste Vorsprünge
- 20: Federzungen
- 21: zweite Vorsprünge
- 22: Federzungen
- 23: feste Anschlagfläche
- 24: Auflaufschrägflächen
- 25, 25', 25'', 25''': Auflaufschrägflächen
- 26: Konusfläche
- 27: Zapfen
- 28: Ausnehmung
- 29: Bodenwand
- 30: Anschlagflächen
- 31: Aussparungen
- 32: Hinterschnittfläche
- 33: Längsnuten
- 34: Vorsprung

## Patentansprüche

1. Kugelgelenkverbinder für zwei Betätigungselemente, insbesondere für die Verbindung eines Kraftfahrzeug-Kupplungspedals (1) mit der Druckstange (2) eines hydraulischen Geberzylinders (3), umfassend einen Kugelkopf (4) an dem einen Betätigungselement, ein eine Kugelpfanne (10) aufweisendes Verriegelungsteil (5) und eine Aufnahme (6) für das Verriegelungsteil (5) an dem anderen Betätigungselement, wobei das Verriegelungsteil (5) in die Aufnahme (6) zunächst bis zu einer Vormontageposition, in welcher der Kugelkopf (4) in die Kugelpfanne (10) einfügbar ist, und danach zusammen mit dem Kugelkopf (4) bis zu einer Endmontageposition einschiebbar ist, in welcher der Kugelkopf (4) in der Kugelpfanne (10) durch das Verriegelungsteil (5) mit Hinterschnitt festgehalten ist und das Verriegelungsteil (5) in der Aufnahme (6) verriegelt ist, wobei das Verriegelungsteil (5) sowohl in der Vormontageposition als auch in der Endmonlageposition durch radial federnde Vorsprünge (19, 21) des Verriegelungsteils (5) an festen Anlageflächen (23) der Aufnahme (6) gehalten ist, und der Kugelkopf (4) in der Endmontageposition durch Federarme (11), die durch axiale Schlitze (12) in der Wandung der Kugelpfanne (10) gebildet sind, sich in der Endmontageposition an der Innenwandfläche (7) der Aufnahme (6) abstützen und dem Kugelkopf (4) mit Hinterschnitt anliegen, in der Kugelpfanne (10) gehalten ist, und wobei das Verriegelungsteil (5) an den Federarmen (11) seiner Kugelpfanne (10) eine Öffnung (15) für den Kugelkopf (4) bildet, die in der Vormontageposition dem Durchmesser des Kugelkopfes (4) gleich oder größer als dieser ist, **dadurch gekennzeichnet, dass** die Federarme (11) mindestens die Hälfte des Umfangs der Kugelpfanne (10) einnehmen, während der verbleibende Umfangsteil als nichtfedernder fester Wandabschnitt (13) zur Aufnahme des Hauptanteils der im Betrieb auftretenden Kräfte ausgebildet ist und sich dabei flächig an der Innenwandfläche (7) der Aufnahme (6) abstützt, wobei die Federarme dieselbe axiale Länge aufweisen, der nichtfedernde feste Wandabschnitt (13) eine etwas größere axiale Länge besitzt, so dass er an seiner Innenfläche bezüglich des Kugelkopfes (4) permanent hinterschnitten ist.

2. Kugelgelenkverbinder nach Anspruch 1, **dadurch gekennzeichnet, dass** die Federarme (11) etwa drei Viertel des Umfangs der Kugelpfanne (10) einnehmen.

3. Kugelgelenkverbinder nach Anspruch 1 oder 2, **dadurch gekennzeichnet, dass** die Federarme (11) an einer äußeren Umfangsnut (14) der Wandung der Kugelpfanne (10) beginnen und an dieser Umfangsnut (14) im nicht-endmontierten Zustand zur Bildung der Öffnung (15) für den Kugelkopf (4) radial nach außen ausgestellt sind.

4. Kugelgelenkverbinder nach einem oder mehreren der vorangehenden Ansprüche, **dadurch gekennzeichnet, dass** am Außenumfang des Verriegelungsteils (5) eine axial angeordnete Rippe (17) vorgesehen ist, welcher eine Axialnut (18) in der Innenwandfläche (7) der Aufnahme (6) komplementär zugeordnet ist.

5. Kugelgelenkverbinder nach einem oder mehreren der vorangehenden Ansprüche, **dadurch gekennzeichnet, dass** an der den Federarmen (11) abgelegenen Seite des Verriegelungsteils (5) zwei etwa diametral gegenüberliegende radial federnde erste Vorsprünge (19) vorgesehen sind, welche in der Vormontageposition des Verriegelungsteils (5) einer festen Anlagefläche (23) in der Aufnahme (6) anliegen, wodurch das Verriegelungsteil (5) gegen Herausziehen aus der Aufnahme (6) gesichert ist.

6. Kugelgelenkverbinder nach Anspruch 5, **dadurch gekennzeichnet, dass** an der den Federarmen (11) abgelegenen Seite des Verriegelungsteils (5) paarweise etwa diametral gegenüberliegend mehrere radial federnde zweite Vorsprünge (21) vorgesehen sind, die den Federarmen (11) in axialer Richtung näher liegen als die der festen Anlagefläche (23) in der Vormontageposition anliegenden ersten Vorsprünge (19) und die der festen Anlagefläche (23) in der Endmontageposition anliegen, wodurch das Verriegelungsteil (5) und der Kugelkopf (4) gegen Herausziehen aus der Aufnahme (6) gesichert sind.

7. Kugelgelenkverbinder nach Anspruch 6, **dadurch gekennzeichnet, dass** an den ersten Vorsprüngen (19) und den zweiten Vorsprüngen (21) jeweils Auflaufschrägflächen (24, 25) vorgesehen sind, denen in der Aufnahme (6) eine komplementäre ringförmige Konusfläche (26) zugeordnet ist, die aus der Innenwandfläche (7) der Aufnahme (6) radial vorspringend und der festen Anlagefläche (23) benachbart gebildet ist, wobei beim Einschieben des Verriegelungsteils (5) in die Aufnahme (6) zunächst die Auflaufschrägflächen (24) der ersten Vorsprünge (19) auf die ringförmige Konusfläche (26) auftreffen und federnd einwärts verlagert werden, bis sie bei Erreichen der Vormontageposition radial auswärts zurückfedernd zur Anlage an die feste Anlagefläche (23) gelangt sind, und wobei bei weiterem Einschieben des Verriegelungsteils (5) in die Aufnahme (6) die Auflaufschrägflächen (25) der zweiten Vorsprünge (21) auf der ringförmigen Konusfläche (26) gleiten und die zweiten Vorsprünge (21) federnd radial einwärts verlagert werden, bis sie bei Erreichen der Endmontageposition radial auswärts zurückfedernd zur Anlage an die feste Anlagefläche (23) gelangt sind.

8. Kugelgelenkverbinder nach Anspruch 7, **dadurch gekennzeichnet, dass** die Auflaufschrägflächen (25', 25", 25"') an den radial federnden zweiten Vorsprüngen (21', 21", 21"') in axialer Richtung in mehreren Stufen unterschiedlich weit von den Federarmen (11) beabstandet sind und beim Einschieben des Verriegelungsteils (5) in die Endmontageposition nacheinander auf die ringförmige Konusfläche (26) auftreffen.

9. Kugelgelenkverbinder nach einem oder mehreren der vorangehenden Ansprüche, **dadurch gekennzeichnet, dass** konzentrisch mit der Kugelpfanne (10) und dieser entgegengesetzt am Verriegelungsteil (5) ein Zapfen (27) vorgesehen ist, der in der Vormontageposition und in der Endmontageposition in eine zentrale Ausnehmung (28) in der Aufnahme (6) das Verriegelungsteil bezüglich der Aufnahme (6) zentrierend eingreift, und dass an dem Zapfen (27) mindestens eine Anschlagfläche (30) vorgesehen ist, welche auf eine Gegenfläche der Aufnahme (6) trifft, wenn beim Einschieben des Verriegelungsteils (5) dieses die Endmontageposition erreicht hat.

10. Kugelgelenkverbinder nach einem oder mehreren der vorangehenden Ansprüche, **dadurch gekennzeichnet, dass** in der Innenwandfläche (7) der Aufnahme (6) innerhalb des Anlagebereichs des nichtfedernden festen Wandabschnitts (13) der Kugelpfanne (10) eine flache Hinterschnittfläche (32) vorgesehen ist.

11. Kugelgelenkverbinder nach Anspruch 10, **dadurch gekennzeichnet, dass** die Hinterschnittfläche (32) um maximal 2° zur Mittelachse der Aufnahme (6) geneigt angeordnet ist und bezogen auf die Endmontageposition etwa in einer Höhe oberhalb der Kugelkopfmitte (4M) beginnend sich in Fügerichtung des Verriegelungsteils (5) erstreckt.

12. Kugelgelenkverbinder nach einem oder mehreren der Ansprüche 1 bis 9, **dadurch gekennzeichnet, dass** am Außenumfang des nichtfedernden festen Wandabschnitts (13') mehrere Längsnuten (33) vorgesehen sind, in welche jeweils ein aus der Innenwandfläche (7') der Aufnahme (6) vorstehender Vorsprung (34) eingreift, der sich bezogen auf die Endmontageposition oberhalb des Kugelmittelpunkts (4M) befindet.

13. Kugelgelenkverbinder nach Anspruch 12, **dadurch gekennzeichnet, dass** die Vorsprünge (34) kugelabschnittsförmig ausgebildet sind und in im Querschnitt komplementär angepasste Längsnuten (33) eingreifen.

## Claims

1. Ball joint connector for two actuating elements, particularly for connection of a motor vehicle clutch pedal (1) with the pushrod (2) of a hydraulic master cylinder (3), comprising a ball head (4) at one actuating element, a locking part (5), which comprises a ball socket (10), and a mount (6) for the locking part (5) at the other actuating element, wherein the locking part (5) is pushable into the mount (6) initially as far as a preassembly position in which the ball head (4) is introducible into the ball socket (10) and thereafter together with the ball head (4) up to a final assembly position in which the ball head (4) is fixed in the ball socket (10) by the locking part (5) with an undercut and the locking part (5) is locked in the mount (6), wherein the locking part (5) not only in the preassembly position, but also in the final assembly position is held by radially resilient projections (19, 21) of the locking part (5) at fixed contact surfaces (23) of the mount (6), and the ball head (4) in the final assembly position is retained in the ball socket (10) by spring arms (11), which are formed by axial slots (12) in the wall of the ball socket (10), which are supported in the final assembly position at the inner wall surface (7) of the mount (6), and which bear against the ball head (4) with an undercut, and wherein the locking part (5) forms at the spring arms (11) of its ball socket (10) an opening (15) for the ball head (4), which opening in the preassembly position is the same as the diameter of the ball head (4) or larger than this, **characterized in that** the spring arms (11) occupy at least half the circumference of the ball socket (10), whilst the remaining circumferential part is formed as a non-resilient, rigid wall section (13) for absorption of the principal part of the forces occurring in operation and is **in that** case supported over an area at the inner wall surface (7) of the mount (6), wherein the spring arms have the same axial length and the non-resilient, rigid wall section (13) has a somewhat larger axial length so that it is permanently undercut at its inner surface with respect to the ball head (4).

2. Ball joint connector according to claim 1, **characterized in that** the spring arms (11) occupy approximately three-quarters of the circumference of the ball socket (10).

3. Ball joint connector according to claim 1 or 2, **characterized in that** the spring arms (11) begin at an outer circumferential groove (14) of the wall of the ball socket (10) and in the non-finally assembled state are set radially outwardly at this circumferential groove (14) for formation of the opening (15) for the ball head (4).

4. Ball joint connector according to one or more of the preceding claims, **characterized in that** provided at the outer circumference of the locking part (5) is an axially arranged rib (17) with which an axial groove (18) in the inner wall surface (7) of the mount (6) has complementary association.

5. Ball joint connector according to one or more of the preceding claims, **characterized in that** provided at the side of the locking part (5) remote from the spring arms (11) are two approximately diametrically opposite radially resilient first projections (19) which in the preassembly position of the locking part (5) bear against a rigid contact surface (23) in the mount (6), whereby the locking part (5) is secured against withdrawal from the mount (6).

6. Ball joint connector according to claim 5, **characterized in that** provided at the side of the locking part (5) remote from the spring arms (11) are several radially resilient second projections (21) which are approximately diametrically opposite in pairs, which lie closer to the spring arms (11) in the axial direction than the first projections (19) bearing against the rigid contact surface (23) in the preassembly position, and which in the final assembly position bear against the rigid contact surface (23), wherein the locking part (5) and the ball head (4) are secured against withdrawal from the mount (6).

7. Ball joint connector according to claim 6, **characterized in that** provided at the first projections (19) and the second projections (21) are respective inclined entry surfaces (24, 25) with which a complementary annular cone surface (26), which radially projects from the inner wall surface (7) of the mount (6) and is formed adjacent to the rigid contact surface (23), is associated in the mount (6), wherein when the locking part (5) is pushed into the mount (6) initially the inclined entry surfaces (24) of the first projections (19) impinge on the annular cone surface (26) and are displaced resiliently inwardly until on reaching the preassembly position they come into contact, by springing back resiliently radially outwardly, with the rigid contact surface (23), and wherein, upon further pushing the locking part (5) into the mount (6), the inclined entry surfaces (25) of the second projections (21) slide on the annular cone surface (26) and the second projections (21) are displaced resiliently radially inwardly until, on reaching the final assembly position, they come into contact, by springing back radially outwardly, with the rigid contact surface (23).

8. Ball joint connector according to claim 7, **characterized in that** the inclined entry surfaces (25', 25" , 25"') at the radially resilient second projections (21', 21", 21"') are spaced apart in axial direction in several stages at different distances from the spring arms (11) and on pushing of the locking part (5) into the final assembly position impinge successively on the annular cone surface (26).

9. Ball joint connector according to one or more of the preceding claims, **characterized in that** provided concentrically with the ball socket (10) and oppositely thereto at the locking part (5) is a pin (27) which in the preassembly position and in the final assembly position engages in a central recess (28) in the mount (6) to center the locking part with respect to the mount (6), and that provided at the pin (27) is at least one abutment surface (30) which impinges on a mating surface of the mount (6) when on pushing-in of the locking part (5) this has reached the final assembly position.

10. Ball joint connector according to one or more of the preceding claims, **characterized in that** a flat undercut surface (32) is provided in the inner wall surface (7) of the mount (6) within the contact region of the non-resilient rigid wall section (13) of the ball socket (10).

11. Ball joint connector according to claim 10, **characterized in that** the undercut surface (32) is arranged to be inclined by at most 2° relative to the center axis of the mount (6) and with respect to the final assembly position extends in the joining direction of the locking part (5) beginning approximately at a height above the ball head center (4M).

12. Ball joint connector according to one or more of claims 1 to 9, **characterized in that** provided at the outer circumference of the non-resilient rigid wall section (13') are several longitudinal grooves (33) in each of which a respective projection (34) protruding from the inner wall surface (7') of the mount (6) engages, which projection is disposed above the ball center point (4M) with respect to the final assembly position.

13. Ball joint connector according to claim 12, **characterized in that** the projections (34) are formed part-spherical and engage in longitudinal grooves (33) adapted to be complementary in cross-section.

## Revendications

1. Joint de liaison à articulation à rotule destiné à deux éléments d'actionnement, notamment pour assurer la liaison d'une pédale d'embrayage (1) de véhicule automobile avec la tige de poussée (2) d'un maître-cylindre hydraulique (3), comprenant une rotule sphérique (4) sur l'un des éléments d'actionnement, une pièce de verrouillage (5) qui présente un coussinet sphérique de rotule (10), et un logement de réception (6) pour la pièce de verrouillage (5) sur l'autre élément d'actionnement, joint de liaison dans lequel la pièce de verrouillage (5) peut être insérée dans le logement de réception (6), tout d'abord jusqu'à une position de montage préliminaire, dans laquelle la rotule sphérique (4) peut être introduite dans le coussinet sphérique de rotule (10), et ensuite, en commun avec la rotule sphérique (4), jusque dans une position de montage finale, dans laquelle la rotule sphérique (4) est retenue, avec contre-dépouille, dans le coussinet sphérique de rotule (10) par la pièce de verrouillage (5), et la pièce de verrouillage (5) est verrouillée dans le logement de réception (6),
dans lequel la pièce de verrouillage (5) est maintenue, aussi bien dans la position de montage préliminaire que dans la position de montage finale, contre des surfaces d'appui rigides (23) du logement de réception (6), par des protubérances radialement élastiques (19, 21) de la pièce de verrouillage (5), et la rotule sphérique (4) est maintenue dans le coussinet sphérique de rotule (10), dans la position de montage finale, par des bras élastiques (11), qui sont formés par des fentes axiales (12) dans la paroi du coussinet sphérique de rotule (10), qui s'appuient, dans la position de montage finale, sur la surface de paroi intérieure (7) du logement de réception (6), et s'appliquent contre la rotule sphérique (4) en formant contre-dépouille, et dans lequel la pièce de verrouillage (5) forme, au niveau des bras élastiques (11) de son coussinet sphérique de rotule (10), une ouverture (15) pour la rotule sphérique (4), qui, dans la position de montage préliminaire, est d'une grandeur égale au diamètre de la rotule sphérique (4) ou plus grande que celui-ci,
**caractérisé en ce que** les bras élastiques (11) couvrent au moins la moitié de la circonférence du coussinet sphérique de rotule (10), tandis que la partie restante de la circonférence est réalisée sous la forme d'un tronçon de paroi rigide (13), non élastique, pour absorber la fraction principale des forces apparaissant en fonctionnement, et s'appuie à cette occasion, par sa surface, sur la surface de paroi intérieure (7) du logement de réception (6), les bras élastiques présentant la même longueur axiale, et le tronçon de paroi rigide (13), non élastique, présentant une longueur axiale un peu plus grande, de manière à être en permanence, au niveau de sa surface intérieure, en contre-dépouille par rapport à la rotule sphérique (4).

2. Joint de liaison à articulation à rotule selon la revendication 1, **caractérisé en ce que** les bras élastiques (11) couvrent environ les trois quarts de la circonférence du coussinet sphérique de rotule (10).

3. Joint de liaison à articulation à rotule selon la revendication 1 ou la revendication 2, **caractérisé en ce que** les bras élastiques (11) débutent au niveau d'une rainure périphérique extérieure (14) de la paroi du coussinet sphérique de rotule (10), et sont coudés radialement vers l'extérieur au niveau de cette rainure périphérique (14), dans l'état ne correspondant pas à l'état de montage final, pour former l'ouverture (15) destinée à la rotule sphérique (4).

4. Joint de liaison à articulation à rotule selon l'une ou plusieurs des revendications précédentes, **caractérisé en ce que** sur la périphérie extérieure de la pièce de verrouillage (5) est prévue une nervure (17) agencée axialement, à laquelle est associée de manière complémentaire, une rainure axiale (18) dans la surface de paroi intérieure (7) du logement de réception (6).

5. Joint de liaison à articulation à rotule selon l'une ou plusieurs des revendications précédentes, **caractérisé en ce que** sur le côté de la pièce de verrouillage (5), opposé à celui où se trouve les bras élastiques (11), sont prévues deux premières protubérances (19) radialement élastiques et environ diamétralement opposées, qui, dans la position de montage préliminaire de la pièce de verrouillage (5), s'appuient contre une surface d'appui rigide (23) dans le logement de réception (6), en sécurisant ainsi la pièce de verrouillage (5) à l'encontre d'une extraction du logement de réception (6).

6. Joint de liaison à articulation à rotule selon la revendication 5, **caractérisé en ce que** sur le côté de la pièce de verrouillage (5), opposé à celui où se trouve les bras élastiques (11), sont prévues, par paires, sensiblement de manière diamétralement opposée, plusieurs deuxièmes protubérances (21) radialement élastiques, qui, dans la direction axiale, sont plus proches des bras élastiques (11) que les premières protubérances (19) s'appuyant contre la surface d'appui rigide (23) dans la position de montage préliminaire, et qui s'appuient contre la surface d'appui rigide (23) dans la position de montage finale, en sécurisant ainsi la pièce de verrouillage (5) et la rotule sphérique (4) à l'encontre d'une extraction du logement de réception (6).

7. Joint de liaison à articulation à rotule selon la revendication 6, **caractérisé en ce que** sur les premières protubérances (19) et sur les deuxièmes protubérances (21) sont prévues respectivement des surfaces inclinées en rampe (24, 25), auxquelles est associée dans le logement de réception (6), une surface conique complémentaire (26) de forme annulaire, qui est formée en saillie radiale de la surface de paroi intérieure (7) du logement de réception (6) et au voisinage de la surface d'appui rigide (23), l'agencement étant tel que lors de l'insertion de la pièce de verrouillage (5) dans le logement de réception (6), ce sont tout d'abord les surfaces inclinées en rampe (24) des premières protubérances (19), qui entrent en contact avec la surface conique (26) de forme annulaire et sont déplacées de manière élastique vers l'intérieur, jusqu'à parvenir, en atteignant la position de montage préliminaire, en appui contre la surface d'appui rigide (23), par rappel élastique radialement vers l'extérieur, et tel que lors de la poursuite de l'insertion de la pièce de verrouillage (5) dans le logement de réception (6), les surfaces inclinées en rampe (25) des deuxièmes protubérances (21) glissent sur la surface conique (26) de forme annulaire, et les deuxièmes protubérances (21) sont déplacées de manière élastique, radialement vers l'intérieur, jusqu'à parvenir, en atteignant la position de montage finale, en appui contre la surface d'appui rigide (23), par rappel élastique radialement vers l'extérieur.

8. Joint de liaison à articulation à rotule selon la revendication 7, **caractérisé en ce que** les surfaces inclinées en rampe (25', 25" , 25"') sur les deuxièmes protubérances (21', 21", 21"') radialement élastiques sont espacées des bras élastiques (11), dans la direction axiale, de manière différente selon plusieurs paliers, et viennent en contact de manière successive avec la surface conique (26) de forme annulaire, lors de l'insertion de la pièce de verrouillage (5) dans la position de montage finale.

9. Joint de liaison à articulation à rotule selon l'une ou plusieurs des revendications précédentes, **caractérisé en ce que** sur la pièce de verrouillage (5), de manière concentrique au coussinet sphérique de rotule (10) et à l'opposé de celui-ci, est prévu un tenon (27) qui, dans la position de montage préliminaire et dans la position de montage finale, s'engage dans un évidement central (28) dans le logement de réception (6) en assurant le centrage de la pièce de verrouillage par rapport au logement de réception (6), et **en ce que** sur le tenon (27) est prévue au moins une surface de butée (30), qui entre en contact avec une surface conjuguée du logement de réception (6) lorsque, pendant l'insertion de la pièce de verrouillage (5), celle-ci a atteint la position de montage finale.

10. Joint de liaison à articulation à rotule selon l'une ou plusieurs des revendications précédentes, **caractérisé en ce que** dans la surface de paroi intérieure (7) du logement de réception (6), à l'intérieur de la zone d'appui du tronçon de paroi rigide (13), non élastique, du coussinet sphérique de rotule (10), est prévue une surface en contre-dépouille (32) plane.

11. Joint de liaison à articulation à rotule selon la revendication 10, **caractérisé en ce que** la surface en contre-dépouille (32) est agencée de manière inclinée au maximum de 2° par rapport à l'axe central du logement de réception (6), et s'étend, en débutant environ à une hauteur au-dessus du centre de rotule sphérique (4M) en se référant à la position de montage finale, dans la direction d'assemblage de la pièce de verrouillage (5).

12. Joint de liaison à articulation à rotule selon l'une ou plusieurs des revendications précédentes, **caractérisé en ce que** sur la périphérie extérieure du tronçon de paroi rigide (13'), non élastique, sont prévues plusieurs rainures longitudinales (33), dans lesquelles s'engage respectivement une protubérance (34), qui fait saillie de la surface de paroi intérieure (7') du logement de réception (6), et se trouve au-dessus du centre de rotule sphérique (4M) en se référant à la position de montage finale.

13. Joint de liaison à articulation à rotule selon la revendication 12, **caractérisé en ce que** les protubérances (34) sont d'une configuration en forme de calotte sphérique et s'engagent dans des rainures longitudinales (33) adaptées de manière complémentaire en section transversale.
